# EUROPÄISCHE PATENTSCHRIFT

(11) **EP 2 851 656 B1**
(45) Veröffentlichungstag und Bekanntmachung des Hinweises auf die Patenterteilung: **29.04.2015**
(21) Anmeldenummer: 13185614.8
(22) Anmeldetag: 23.09.2013
(51) Int. Cl.: G01D 11/24

(54) **Gehäuse für einen Sensor**
Housing for a sensor
Boîtier pour un capteur

(43) Veröffentlichungstag der Anmeldung: 25.03.2015
(73) Patentinhaber: SICK STEGMANN GmbH, 78166 Donaueschingen (DE)
(72) Erfinder: Tabler, Eduard, 78050 Villingen-Schwenningen (DE)
(74) Vertreter: Hehl, Ulrich

(56) Entgegenhaltungen:
- DE-A1- 19 913 262
- DE-A1-102011 084 411
- DE-U1- 20 218 228
- GB-A- 900 552
- US-A- 4 800 238
- US-A- 5 358 135
- US-A1- 2012 028 485

## Beschreibung

Die Erfindung betrifft ein Gehäuse für einen Sensor gemäß dem Oberbegriff des unabhängigen Anspruchs 1, das die elektrischen und optoelektrischen Elemente eines Sensors aufnimmt und vor Verschmutzung sowie mechanischer Beanspruchung schützt.

Herkömmliche Gehäuse für Sensoren bestehen aus einem Grundkörper, der durch einen Deckel verschließbar ist, so dass die elektrischen und optoelektrischen Elemente des Sensors im Innern des Gehäuses geschützt sind.

Es besteht die Notwendigkeit, dass Leitungsverbindungen zwischen den Elementen des Sensors und externen Geräte zur Verfügung gestellt und nach Bedarf geändert werden müssen, so dass eine leichte Zugänglichkeit an im Innern des Gehäuses vorhandene Anschlüsse gewährleistet sein muss.

Ein herkömmliches Gehäuse ist z. B. aus der DE 20 2010 009 785 U1 bekannt, wobei das Gehäuse derart ausgebildet ist, dass ein Deckel an einem Grundkörper des Gehäuses mittels Verschweißen befestigt ist. Dadurch sind die im Gehäuse befindlichen Sensorelemente sicher aufbewahrt, wobei die Zugänglichkeit an die Sensorelemente so gut wie nicht möglich ist.

Aus der DE 20 2007 009 966 U1 ist ein weiteres Gehäuse für einen optischen Sensor bekannt, bei dem das Gehäuse aus einem Hohlprofilkörper besteht, der mittels Verschlusskappen dicht verschließbar ist. Hierbei werden die Verschlusskappen auf die entsprechenden Aufnahmen an den Hohlprofilkörpern gesetzt, wobei entsprechende Befestigungsmittel ineinander eingreifen.

Aus der DE 10 2011 084 411 A1 ist eine Winkelmesseinrichtung mit einem Gehäuse gemäß dem Oberbegriff des unabhängigen Anspruchs 1 bekannt. Hierbei ist die Verschlussklappe auf den Grundkörper verschraubt, so dass eine Leitung seitlich radial aus dem Gehäuse ins Freie geführt werden kann.

Bei den bekannten Gehäusen besteht der Nachteil, dass ein Zugang an die Sensorelemente im Innern der Gehäuse nicht ohne Zerstörung des Gehäuses oder die Verwendung von Werkzeugen möglich ist. Ferner ist lediglich eine radiale Führung der Leitung aus dem Gehäuse ins Freie möglich.

Es ist daher eine Aufgabe der vorliegenden Erfindung, die Handhabung eines Sensors, insbesondere die Zugänglichkeit ins Innere des Sensorgehäuses, zu vereinfachen und eine flexible Führung der Leitung ins Freie zu ermöglichen.

Die Aufgabe wird erfindungsgemäß gelöst durch ein Gehäuse für einen Sensor mit den Merkmalen des unabhängigen Anspruchs 1.

Dadurch ist eine freie Wahl der Verlegung der Kabel nach Bedarf möglich. D. h. die Kabel können in axiale Richtung koaxial zum Gehäuse und/oder in radial tangentiale Richtung, d. h. erst senkrecht zur Umfangwand dann entlang des Umfangs des Gehäuses, verlegt werden.

Gemäß einem Ausführungsbeispiel weist die Verschlussklappe einen radial in Richtung der Stirnwand des Grundkörpers erstreckenden ersten Wandabschnitt und einen axial in Richtung der ersten Seite des Grundkörpers erstreckenden zweiten Wandabschnitt auf, so dass in der Schließstellung der erste Wandabschnitt der Verschlussklappe mit der Stirnwand des Grundkörpers eine kreisförmige Scheibe bildet und der zweite Wandabschnitt der Verschlussklappe mit einer Umfangwand des Grundkörpers einen Zylinder bildet.

Der Aufbau ermöglicht eine kompakte Form des Gehäuses, wodurch Materialkosten eingespart werden können.

Es ist weiterhin vorteilhaft, dass der Grundkörper eine radial nach innen erstreckende Zwischenwand aufweist, die dem teiloffenen Bereich der zweiten Seite gegenüberliegend angeordnet ist und zumindest eine innenseitige Aussparung zum Aufnehmen von zumindest einem Kabelanschluss aufweist. Hierbei können je nach Wunsch bzw. Bedarf entsprechende Kabelanschlüsse an der Zwischenwand vorgesehen werden, so dass das Verbinden des Sensors mit externen Geräten vereinfacht ist.

Gemäß einem weiteren Ausführungsbeispiel besteht das Schließmittel aus einer Aussparung am Grundkörper und einem elastischen Schnapphaken an der Verschlussklappe, das in der Schließstellung die Verschlussklappe mit dem Grundkörper mittels eines Eingreifens des Schnapphakens in die Aussparung verriegelt. Dadurch ist es durch das Aufbringen eines Druckes auf die Verschlussklappe möglich, die Verriegelung zwischen der Verschlussklappe und dem Grundkörper zu lösen, um das Gehäuse zu öffnen. Eine leichte Zugänglichkeit an die im Innern des Gehäuses befindlichen Sensorelemente ist somit gewährleistet.

Gemäß einem weiteren Ausführungsbeispiel besteht die Feder-Nut-Verbindung aus einer am Grundkörper vorgesehenen Führungsnut zum Aufnehmen der Verschlussklappe und einer Feder auf einer Seite der Verschlussklappe, wobei die Führungsnut zumindest ein Paar gegenüberliegende Aussparungen zum Ermöglichen eines Drehens der aufgenommenen Verschlussklappe und zum Verhindern einer axialen Bewegung der Verschlussklappe in der Schließstellung aufweist und die Feder formschlüssig zu der Führungsnut und deren Aussparung ausgebildet ist. Hierdurch ist ein Schwenken der Verschlussklappe zum Öffnen des Gehäuses möglich, wobei eine axiale Bewegung der Verschlussklappe durch die Aussparungen unterbunden ist.

Gemäß einem weiteren Ausführungsbeispiel weist die Verschlussklappe Dichtmittel auf, das die Öffnungen in der Schließstellung ohne Kabel abdichtet und in der mit Kabel verlegten Schließstellung die Kabel mit Druck beaufschlagt, so dass eine Zugentlastung an den Kabeln besteht. Wenn also keine Kabel nach außen verlegt werden, sind die Öffnungen in der Schließstellung durch das Dichtmittel verschlossen, so dass das Innere des Gehäuses hermetisch abgedichtet ist. Im Falle, dass Kabel aus dem Innern des Gehäuses ins Freie geleitet werden, ist das Dichtmittel in der Schließstellung zusammen gepresst, so dass die Dichtheit weiterhin gewährleistet ist. Ferner übt das Dichtmittel einen Druck auf die verlegten Kabel aus, so dass die Kabel gehalten werden und somit eine Zugentlastung erfahren.

Gemäß einem weiteren Ausführungsbeispiel ist ein Sicherungsmittel zum Sichern gegen ein Lösen der Verschlussklappe aus der Schließstellung vorgesehen, das aus einem Zapfen und einer dem Zapfen angepassten Aussparung besteht.

Gemäß einem weiteren Ausführungsbeispiel sind der Zapfen auf der Zwischenwand des Grundkörpers und die angepasste Aussparung an der Verschlussklappe vorgesehen. Hierdurch ist eine zusätzliche Sicherung gegen ungewolltes Öffnen der Verschlussklappe vorhanden.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung eines erfindungsgemäßen Gehäuses mit geöffneter Verschlussklappe;
- Fig. 2: eine schematische Draufsicht einer erfindungsgemäßen Ausführungsform des Gehäuses mit Detailansicht der Halterung der Versschlussklappe;
- Fig. 3: eine schematische Darstellung eines erfindungsgemäßen Gehäuses ohne Verschlussklappe mit Detailansicht der Halterungsnut;
- Fig. 4: eine schematische Darstellung eines erfindungsgemäßen Gehäuses mit geschlossener Verschlussklappe; und
- Fig. 5A und 5B: jeweils eine Detailansicht des Schließmittels bzw. Sicherungsmittels.

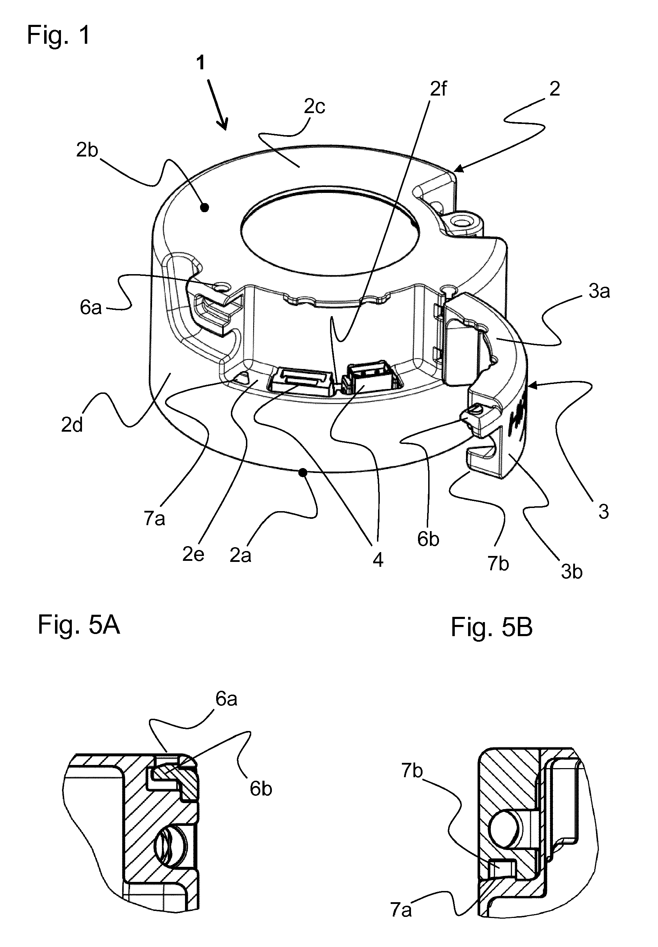

In Figur 1 ist schematisch ein erfindungsgemäßes Gehäuse (1) gezeigt, das einen Grundkörper (2) und eine Verschlussklappe (3) in einer Offenstellung (B) aufweist. Der Grundkörper (2) ist auf einer ersten Seite (2a) offen und hat auf einer gegenüberliegenden zweiten Seite (2b) eine Stirnwand (2c). Die Stirnwand (2c) hat in ihrer Mitte eine Öffnung zum Aufnehmen beispielweise einer nicht dargestellten Welle eines ebenfalls nicht dargestellten Motors. Ferner verschließt die Stirnwand (2c) einen Teilbereich der zweiten Seite (2b) des Grundkörpers (2), so dass ein teiloffener Bereich der zweiten Seite (2b) vorhanden ist.

Der Grundkörper (2) hat bevorzugter Weise eine zylindrische Form, so dass von der Stirnwand (2c) aus sich eine im Wesentlichen zylindrische Umfangwand (2d) axial erstreckt.

Dem teiloffenen Bereich der zweiten Seite (2b) des Grundkörpers (2) ist in axialer Richtung beabstandet eine Zwischenwand (2e) angeordnet, die von der Umfangwand (2d) radial nach innen des Grundkörpers (2) sich erstreckt. Hierbei weist die Zwischenwand (2e) eine Aussparung (2f) auf, die zum Aufnehmen von zumindest einem Kabelanschluss (4) dient. Im gezeigten Beispiel sind zwei Kabelanschlüsse (4), insbesondere Stecker, vorgesehen, wobei die Kabelanschlüsse (4) auf eine nicht dargestellte Leiterkarte bzw. -platine gesteckt sind. Hierbei kann es sich um einen Temperatursensor-Anschluss und einen DSL-Datenkabelanschluss handeln. Mittels der Kabelanschlüsse (4) können externe Geräte über Kabel angeschlossen werden, so dass die Kabel aus dem Innern des Grundkörpers (2) des Gehäuses (1) ins Freie geleitet werden.

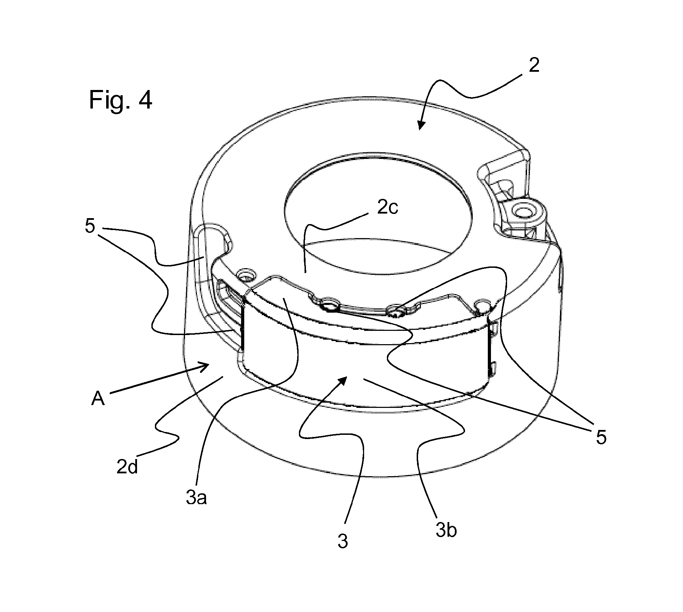

Die in der Offenstellung (B) befindliche Verschlussklappe (3) ist auf einer Seite an dem Grundkörper (2) lösbar montiert. Die Verschlussklappe (3) weist einen radial in Richtung der Stirnwand (2c) des Grundkörpers (2) erstreckenden ersten Wandabschnitt (3a) und einen axial in Richtung der ersten Seite (2a) des Grundkörpers (2) erstreckenden zweiten Wandabschnitt (3b) auf. Hierbei ergänzt die Verschlussklappe (3) formschlüssig den teiloffenen Bereich der zweiten Seite (2b) des Grundkörpers (2), so dass in einer Schließstellung (A), wie in Figur 4 gezeigt, die Verschlussklappe (3) sich vollständig in dem Grundkörper (2) einfügt, so dass der Innenraum des Gehäuses (1) hermetisch verschlossen wäre, wenn das Gehäuse (1) noch auf die nicht dargestellte Welle montiert wäre. D. h. in der Schließstellung (A) bildet der erste Wandabschnitt (3a) der Verschlussklappe (3) mit der Stirnwand (2b) des Grundkörpers (2) eine kreisförmige Scheibe und der zweite Wandabschnitt (3b) der Verschlussklappe (3) mit der Umfangwand (2d) des Grundkörpers (2) einen Zylinder.

Zur hermetischen Abdichtung des Grundkörpers (2) weist die Verschlussklappe (3) Dichtmittel auf. Durch die Wahl einer gewünschten Shore-Härte des Dichtmittels kann ein Anpressdruck der Verschlussklappe (3) auf den Grundkörper (2) des Gehäuses (1) erhöht oder reduziert werden, wodurch einen Abdichtungsgrad einstellbar ist.

Zum Verschließen des Gehäuses (1) ist ein Schließmittel vorgesehen, das aus einer Aussparung (6a) am Grundkörper (2) an der Stirnwand (2c) und einen dazu passenden, in die Aussparung (6a) eingreifbaren Schnapphaken, der insbesondere elastisch ist, besteht, wobei in der Schließstellung (A) das Schließmittel die Verschlussklappe (3) mit dem Grundkörper (2) mittels eines Eingreifens des Schnapphakens (6b) in die Aussparung (6a) verriegelt.

Durch ein Pressen auf die Verschlussklappe (3) in Richtung des Schnapphakens (6b) kann der Schnapphaken (6b) wiederum aus der Aussparung (6a) des Grundkörpers (2) gelöst werden, so dass die Verschlussklappe (3) werkzeuglos von der Schließstellung (A) in die Offenstellung (B) geschwenkt werden kann. Somit lässt sich das Gehäuse (1) ohne Benutzung eines Werkzeuges schließen bzw. öffnen, um auf einfachste Art und Weise an das Innere des Gehäuses (1), insbesondere die Kabelanschlüsse (4), heranzukommen.

Zusätzlich zu dem Schließmittel ist eine Sicherung gegen ein Lösen der Verschlussklappe (3) aus der Schließstellung in Form eines Sicherungsmittels vorgesehen, wobei das Sicherungsmittel aus einem Zapfen (7a), der insbesondere auf der Zwischenwand (2e) des Grundkörpers (2) vorgesehen ist, und aus einer dem Zapfen (7a) angepassten Aussparung (7b), die insbesondere an einer unteren Seite der Verschlussklappe (3) vorgesehen ist, besteht. Hierbei ist eine Haltekraft des Sicherungsmittels gleich, vorteilhafterweise geringer, als die Halte- bzw. Schließkraft des Schließmittels ausgelegt, so dass bei einer Überwindung der Haltekraft des Schließmittels durch Pressen der Verschlussklappe (3) die Haltekraft des Sicherungsmittels dem Öffnen der Verschlussklappe (3) nicht entgegen steht. Zum Beispiel im Falle eines Versagens des Schließmittels, z. B. durch Abbrechen des Schnapphakens (6b), verhindert die Haltekraft des Sicherungsmittels die Verschlussklappe (3) vor einem selbstständigen Schwenken in die Offenstellung (B).

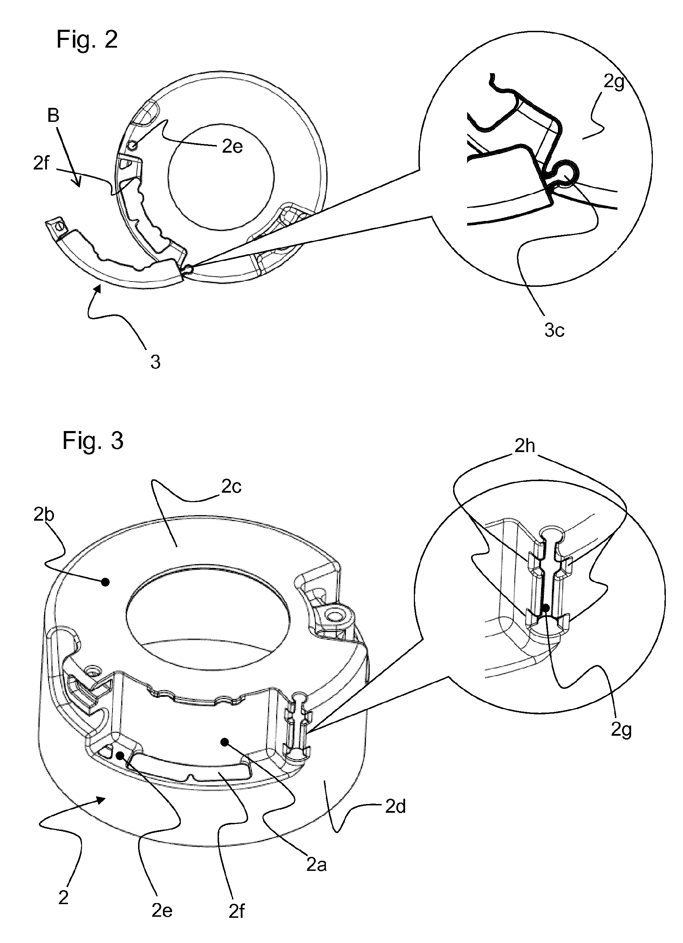

In Figur 2 ist das Gehäuse (1) schematisch in der Draufsicht gezeigt, wobei die Verschlussklappe (3) sich in der Offenstellung (B) befindet. Insbesondere in der Figur 2 ist die Zwischenwand (2e) mit der Aussparung (2f) ohne die in Figur 1 gezeigten Kabelanschlüsse (4) dargestellt. Weiterhin ist eine Detailansicht der Verbindung zwischen der Verschlussklappe (3) und dem Grundkörper (2) gezeigt, bei der die Verschlussklappe (3) mit dem Grundkörper (2) mittels einer Feder-Nut-Verbindung verbunden ist.

Hierbei besteht die Feder-Nut-Verbindung aus einer am Grundkörper (2) vorgesehenen Führungsnut (2g) zum Aufnehmen der Verschlussklappe (3) und einer Feder (3c) auf einer Seite der Verschlussklappe (3), wobei die Führungsnut (2g), wie im Detail in Figur 3 gezeigt, zumindest ein Paar gegenüberliegende Aussparungen (2h) zum Ermöglichen eines Drehens der aufgenommenen Verschlussklappe (3) und zum Verhindern einer axialen Bewegung der Verschlussklappe (3) in der Schließstellung (A) aufweist und die Feder (3c) formschlüssig zu der Führungsnut (2g) und deren Aussparung (2h) ausgebildet ist.

In der gezeigten Offenstellung (B) der Verschlussklappe (3), insbesondere in einem Winkel von ca. 45° zu dem Grundkörper (2), befindet sich die Feder (3c) der Verschlussklappe (3) fluchtend in der Führungsnut (2g) des Grundkörpers (2), so dass die Feder (3c) durch das zumindest eine Paar gegenüberliegender Aussparungen (2h) der Führungsnut (2g) nicht gehindert ist. Dadurch ist es möglich, die Verschlussklappe (3) durch Bewegen entlang der Führungsnut (2g) des Grundkörpers (2) von diesem zu lösen bzw. abzumontieren.

Somit ist durch diese Ausgestaltung der Feder-Nut-Verbindung ein werkzeugloses Montieren bzw. Demontieren der Verschlussklappe (3) vom Grundkörpers (2) ermöglicht, wodurch sich erhebliche Herstell- bzw. Montagekosten des Gehäuses (1) reduzieren lassen, so dass das Gehäuse (1) preisgünstiger hergestellt werden kann.

Wie bereits erwähnt, ist in der Figur 3 der Grundkörper (2) ohne die Verschlussklappe (3) schematisch detaillierter gezeigt. Insbesondere ist die Ausgestaltung der Führungsnut (2g) der Feder-Nut-Verbindung vergrößert dargestellt. In dem dargestellten Ausführungsbeispiel weist die Führungsnut zwei Paare gegenüberliegender Aussparungen (2h) auf, so dass an der entsprechenden Feder (3c) an der Verschlussklappe (3) ebenfalls zwei Stege vorgesehen sein müssen, damit die Feder (3c) der Verschlussklappe (3) in der Führungsnut (2g) des Grundkörpers (2), insbesondere in Form eines Scharniers, gesichert wird.

In Figur 4 ist das Gehäuse (1) in einem geschlossenen Zustand dargestellt. D. h. die Verschlussklappe (3) befindet sich in der Schließstellung (A). Hierbei sind abgedichtete Öffnungen (5) zwischen der Verschlussklappe (3) und dem Grundkörper (2) vorgesehen, die zum Verlegen von Kabel aus dem Inneren des Gehäuses (1) dienen. Die Öffnungen (5) werden zwischen der Stirnwand (2c) des Grundkörpers (2) und dem ersten Wandabschnitt (3a) der Verschlussklappe (3) gebildet. Weitere Öffnungen (5) werden zwischen der Umfangwand (2d) des Grundkörpers (2) und dem zweiten Wandabschnitt (3b) der Verschlussklappe (3) am Umfang des Gehäuses (1) gebildet.

Die Öffnungen (5) sind durch das beschriebene Dichtmittel abgedichtet, wenn keine Kabel, die an die innenliegenden Kabelanschlüsse (4) angeschlossen sind, vom Innern des Gehäuses (1) nach außen geleitet werden. Im Falle, dass Kabel vorgesehen sind, sind die Öffnungen (5) weiterhin durch die durchgeleiteten Kabel und das zusammengedrückte Dichtmittel abgedichtet, so dass das Innere des Gehäuses (1) in beiden Fällen hermetisch abgedichtet ist.

Hierbei ermöglichen die Öffnungen (5) eine axiale und/oder radial tangentiale Verlegung der Kabel aus dem Inneren des Gehäuses ins Freie. D. h. die Kabel werden bei der axialen Verlegung koaxial zu dem Gehäuse (1) geleitet. Bei der radial tangentialen Verlegung werden die Kabel zuerst senkrecht zu der Umfangwand (2d) und dann entlang des Umfanges des Grundkörpers (2) geführt.

Somit besteht die Freiheit bei einem vorgegebenen Bauraum, die Kabel entsprechend zu verlegen, um die Vorgaben zu erfüllen. Hierbei können die Kabel einzeln oder in Bündel verlegt werden.

In den Figuren 5A und 5B sind das Schließmittel und das Sicherungsmittel vergrößert dargestellt. In der dargestellten Schließstellung (A) in der Figur 5A rastet der Schnapphaken (6b) der Verschlussklappe (3) in die Aussparung (6a) des Grundkörpers (2) ein. Hiergegen ragt bei dem Sicherungsmittel lediglich der Zapfen (7a) des Grundkörpers (2) geringfügig in die Aussparung (7b) der Verschlussklappe (3). Dadurch kann die Schließkraft des Schließmittels unterschiedlich zu der Halte- bzw. Schließkraft des Sicherungsmittels ausgelegt sein.

**Bezugszeichenliste**

| | | | |
|---|---|---|---|
| 1 | Gehäuse | A | Schließstellung |
| 2 | Grundkörper | B | Offenstellung |
| 2a | erste Seite | | |
| 2b | zweite Seite | | |
| 2c | Stirnwand | | |
| 2d | Umfangwand | | |
| 2e | Zwischenwand | | |
| 2f | Aussparung | | |
| 2g | Führungsnut | | |
| 2h | Aussparung | | |
| 3 | Verschlussklappe | | |
| 3a | erste Wandabschnitt | | |
| 3b | zweite Wandabschnitt | | |
| 3c | Feder | | |
| 4 | Kabelanschluss | | |
| 5 | Öffnungen | | |
| 6a | Aussparung | | |
| 6b | Schnapphaken | | |
| 7a | Zapfen | | |
| 7b | Aussparung | | |

## Patentansprüche

1. Gehäuse (1) für einen Sensor mit einem Grundkörper (2), der auf einer ersten Seite (2a) offen ist und auf einer gegenüberliegenden zweiten Seite (2b) eine Stirnwand (2c) aufweist, die einen Teilbereich der zweiten Seite (2b) verschließt, so dass die zweite Seite (2b) einen teilgeschlossenen und teiloffenen Bereich aufweist, und einer Verschlussklappe (3) zum Verschließen des Grundkörpers (2) und zum Verlegen von Kabel aus einem Innern des Gehäuses (1) ins Freie, wobei die Verschlussklappe (3) den teiloffenen Bereich der zweiten Seite (2b) formschlüssig ergänzt und an dem Grundkörper (2) lösbar montiert ist, so dass in einer Schließstellung (A) der Verschlussklappe (3) zu dem Grundkörper (2) die zweite Seite (2b) des Grundkörpers (2) durch die Verschlussklappe (3) hermetisch verschlossen ist, **dadurch gekennzeichnet, dass** die Verschlussklappe (3) derart ausgelegt ist, dass sie mittels Betätigen eines elastischen Schließmittels an der Verschlussklappe (3) werkzeuglos aus der Schließstellung (A) lösbar ist, und dass sie mittels einer Feder-Nut-Verbindung werkzeuglos an bzw. von dem Grundkörper (3) montier- bzw. demontierbar ist, wenn sie sich in einer Offenstellung (B) zu dem Grundkörper (3) befindet, wobei in der Schließstellung (A) der Verschlussklappe (3) zu dem Grundkörper (2) abgedichtete Öffnungen (5) vorgesehen sind, die zum Verlegen von Kabel aus dem Innern des Gehäuses (1) ins Freie dienen und wobei die Öffnungen (5) ein Verlegen der Kabel in axiale oder radial tangentiale Richtung aus dem Gehäuse (1) ins Freie ermöglichen.

2. Gehäuse nach Anspruch 1, wobei die Verschlussklappe (3) einen radial in Richtung der Stirnwand (2c) des Grundkörpers (2) erstreckenden ersten Wandabschnitt (3a) und einen axial in Richtung der ersten Seite (2a) des Grundkörpers (2) erstreckenden zweiten Wandabschnitt (3b) aufweist, so dass in der Schließstellung (A) der erste Wandabschnitt (3a) der Verschlussklappe (3) mit der Stirnwand (2c) des Grundkörpers (2) eine kreisförmige Scheibe bildet und der zweite Wandabschnitt (3b) der Verschlussklappe (3) mit einer Umfangwand (2d) des Grundkörpers (2) einen Zylinder bildet.

3. Gehäuse nach Anspruch 1 oder 2, wobei der Grundkörper (2) eine radial nach innen erstreckende Zwischenwand (2e) aufweist, die dem teiloffenen Bereich der zweiten Seite (2b) gegenüberliegend angeordnet ist und zumindest eine innenseitige Aussparung (2f) zum Aufnehmen von zumindest einem Kabelanschluss (4) aufweist.

4. Gehäuse nach einem der Ansprüche 1 bis 3, wobei das Schließmittel aus einer Aussparung (6a) am Grundkörper (2) und einem elastischen Schnapphaken (6b) an der Verschlussklappe (3) besteht, das in der Schließstellung (A) die Verschlussklappe (3) mit dem Grundkörper (2) mittels eines Eingreifens des Schnapphakens (6b) in die Aussparung (6a) verriegelt.

5. Gehäuse nach einem der Ansprüche 1 bis 4, wobei die Feder-Nut-Verbindung aus einer am Grundkörper (2) vorgesehenen Führungsnut (2g) zum Aufnehmen der Verschlussklappe (3) und einer Feder (3c) auf einer Seite der Verschlussklappe (3) besteht, wobei die Führungsnut (2g) zumindest ein Paar gegenüberliegender Aussparungen (2h) zum Ermöglichen eines Drehens der aufgenommenen Verschlussklappe (3) und zum Verhindern einer axialen Bewegung der Verschlussklappe (3) in der Schließstellung (A) aufweist und die Feder (3c) formschlüssig zu der Führungsnut (2g) und deren Aussparung (2h) ausgebildet ist.

6. Gehäuse nach Anspruch 1, wobei die Verschlussklappe (3) Dichtmittel aufweist, das die Öffnungen (5) in der Schließstellung (A) ohne Kabel abdichtet und in der mit Kabel verlegten Schließstellung (A) die Kabel mit Druck beaufschlagt, so dass eine Zugentlastung an den Kabeln besteht.

7. Gehäuse nach einem der Ansprüche 3 bis 6, wobei Sicherungsmittel zum Sichern gegen ein Lösen der Verschlussklappe (3) aus der Schließstellung (A) vorgesehen ist, das aus einem Zapfen (7a) und einer dem Zapfen (7a) angepassten Aussparung (7b) besteht.

8. Gehäuse nach Anspruch 7, wobei der Zapfen auf der Zwischenwand (2e) des Grundkörpers (2) und die angepasste Aussparung (7b) an der Verschlussklappe (3) vorgesehen sind.

## Claims

1. A housing (1) for a sensor having a base body (2) which is open at a first side (2a) and has an end wall (2c) at an oppositely disposed second side (2b), said end wall closing a part region of the second side (2b) such that the second side (2b) has a partly closed region and a partly open region, and having a closure flap (3) for closing the base body (2) and for laying cable from an interior of the housing (1) to the outside, wherein the closure flap (3) complements the partly open region of the second side (2b) in a shape matched manner and is releasably mounted at the base body (2) such that the second side (2b) of the base body (2) is hermetically closed by the closure flap (3) in a closed position (A) of the closure flap (3) with respect to the base body (2), **characterised in that** the closure flap (3) is designed such that it can be released from the closed position (A) without tools by means of an actuation of an elastic closing means at the closure flap (3); and **in that** it can be mounted at or removed from the base body (3) without tools by means of a tongue and groove connection if it is in an open position (B) with respect to the base body (2), with openings (5) being provided which are sealed with respect to the base body (2) in the closed position (A) of the closure flap (3) and which serve for the laying of cable from the interior of the housing (1) to the outside, and with the openings (5) allowing a laying of the cables from the housing (1) to the outside in the axially or radially tangential direction.

2. A housing in accordance with claim 1, wherein the closure flap (3) has a first wall section (3a) extending radially in the direction of the end wall (2c) of the base body (2) and a second wall section (3b) extending axially in the direction of the first side (2a) of the base body (2) such that the first wall section (3a) of the closure flap (3) forms a circular disc with the end wall (2c) of the base body (2) in the closed position (A) and the second wall section (3b) of the closure flap (3) forms a cylinder with a peripheral wall (2d) of the base body (2).

3. A housing in accordance with claim 1 or claim 2, wherein the base body (2) has a radially inwardly extending intermediate wall (2e) which is arranged disposed opposite the partly open region of the second side (2b) and has at least one inside cut-out (2f) for receiving at least one cable connection (4).

4. A housing in accordance with any one of the claims 1 to 3, wherein the closing means comprises a cut-out (6a) at the base body (2) and an elastic snap-hook (6b) at the closure flap (3) and the closing means locks the closure flap (3) to the base body (2) by means of an engaging of the snap-hook (6b) into the cut-out (6a) in the closed position (A).

5. A housing in accordance with any one of the claims 1 to 4, wherein the tongue and groove connection comprises a guide groove (2g) provided at the base body (2) for receiving the closure flap (3) and a tongue (3c) at a side of the closure flap (3), with the guide groove (2g) having at least one pair of oppositely disposed cut-outs (2h) for allowing a rotation of the received closure flap (3) and for preventing an axial movement of the closure flap (3) in the closed position (A) and with the tongue (3c) being formed with shape matching with respect to the guide groove (2g) and its cut-out (2h).

6. A housing in accordance with claim 1, wherein the closure flap (3) has sealing means which seals the openings (5) in the closed position (A) without cables and applies pressure to the cables in the closed position (A) with laid cables so that there is strain-relief at the cables.

7. A housing in accordance with any one of the claims 3 to 6, wherein a securing means is provided for security against a release of the closure flap (3) from the closed position (A), the securing means comprising a spigot (7a) and a cut-out (7b) matched to the spigot (7a).

8. A housing in accordance with claim 7, wherein the spigot is provided at the intermediate wall (2e) of the base body (2) and the matched cut-out (7b) is provided at the closure flap (3).

## Revendications

1. Boîtier (1) pour un capteur comprenant un corps de base (2), qui est ouvert sur un premier côté (2a) et qui comporte une paroi frontale (2c) sur un second côté opposé (2b), ladite paroi frontale obturant une zone partielle du second côté (2b) de telle façon que le second côté (2b) comprend une zone partiellement fermée et une zone partiellement ouverte, et un volet de fermeture (3) pour fermer le corps de base (2) et pour poser des câbles depuis l'intérieur du boîtier (1) vers l'extérieur, dans lequel le volet de fermeture (3) complète par coopération de formes la zone partiellement ouverte du second côté (2b) et est monté de façon détachable sur le corps de base (2) de telle sorte que, dans une position de fermeture (A) du volet de fermeture (3) par rapport au corps de base (2), le second côté (2b) du corps de base (2) est fermé hermétiquement par le volet de fermeture (3), **caractérisé en ce que** le volet de fermeture (3) est conçu de telle façon qu'il peut être libéré, au moyen d'un actionnement d'un organe de fermeture élastique sur le volet de fermeture (3), sans outils depuis la position de fermeture (A), et qu'il peut être monté ou démonté, au moyen d'une liaison à languette-et-rainure, sur le corps de base (3) ou depuis celui-ci, lorsqu'il se trouve dans une position d'ouverture (B) par rapport au corps de base (3), dans lequel il est prévu des ouvertures (5), étanchées dans la position de fermeture (4) du volet de fermeture (3) par rapport au corps de base (2), ouvertures qui servent à la pose de câbles hors de l'intérieur du boîtier (1) vers l'extérieur, lesdites ouvertures (5) permettant une pose des câbles en direction axiale ou en direction tangentielle radiale hors du boîtier (1) vers l'extérieur.

2. Boîtier selon la revendication 1, dans lequel le volet de fermeture (3) comprend une première portion de paroi (3a) s'étendant radialement en direction de la paroi frontale (2c) du corps de base (2) et une seconde portion de paroi (3b) s'étendant axialement en direction du premier côté (2a) du corps de base (2), de sorte que dans la position de fermeture (A) la première portion de paroi (3a) du volet de fermeture (3) forme avec la paroi frontale (2c) du corps de base (2) un disque de forme circulaire, et la seconde portion de paroi (3b) du volet de fermeture (3) forme avec une paroi périphérique (2d) du corps de base (2) un cylindre.

3. Boîtier selon la revendication 1 ou 2, dans lequel le corps de base (2) comprend une paroi intermédiaire (2e) s'étendant radialement vers l'intérieur, qui est agencée à l'opposé de la zone partiellement ouverte du second côté (2b), et qui comporte au moins un évidement (2f) du côté intérieur pour recevoir au moins un connecteur de câble (4).

4. Boîtier selon l'une des revendications 1 à 3, dans lequel l'organe de fermeture est constitué par un évidement (6a) sur le corps de base (2) et par un crochet d'encliquetage élastique (6b) sur le volet de fermeture (3) qui, dans la position de fermeture (A), verrouille le volet de fermeture (3) avec le corps de base (2) au moyen d'un engagement du crochet d'encliquetage (6b) dans l'évidement (6a).

5. Boîtier selon l'une des revendications 1 à 4, dans lequel la liaison à rainure-et-languette est constituée par une rainure de guidage (2g) prévue sur le corps de base (2) pour recevoir le volet de fermeture (3) et par une languette (3c) sur un côté du volet de fermeture (3), dans lequel la rainure de guidage (2g) comporte au moins une paire d'évidements opposés (2h) pour permettre une rotation du volet de fermeture (3) reçu et pour empêcher un mouvement axial du volet de fermeture (3) dans la position de fermeture, et la languette (3c) est réalisée avec coopération de formes par rapport à la rainure de guidage (2g) et à ses évidements (2h).

6. Boîtier selon la revendication 1, dans lequel le volet de fermeture (3) comprend des moyens d'étanchement qui étanchent les ouvertures (5) dans la position de fermeture (A) en l'absence de câble et qui appliquent une pression sur les câbles dans la position de fermeture (A) lorsque les câbles sont posés, de sorte qu'il en résulte une décharge des contraintes de traction sur les câbles.

7. Boîtier selon l'une des revendications 3 à 6, dans lequel il est prévu des moyens de blocage pour le blocage à l'encontre d'une libération du volet de fermeture (3) hors de la position de fermeture (4), moyen qui sont constitués par un tenon (7a) et par un évidement (7b) ajusté au tenon (7a).

8. Boîtier selon la revendication 7, dans lequel le tenon est prévu sur la paroi intermédiaire (2a) du corps de base (2) et l'évidement ajusté (7b) est prévu sur le volet de fermeture (3).
